# EUROPÄISCHE PATENTSCHRIFT

(11) **EP 0 555 710 B1**
(45) Veröffentlichungstag und Bekanntmachung des Hinweises auf die Patenterteilung: **31.05.2000**
(21) Anmeldenummer: 93101471.6
(22) Anmeldetag: 30.01.1993
(51) Int. Cl.: G01N 35/10, G01F 23/26

(54) **Flüssigkeitstransfereinrichtung für ein Analysegerät**
Liquid transfer device for a clinical analyser
Dispositif de transfert de liquide pour appareil d'analyse

(30) Priorität: 08.02.1992 DE 4203638
(43) Veröffentlichungstag der Anmeldung: 18.08.1993
(73) Patentinhaber: Roche Diagnostics GmbH, 68298 Mannheim (DE)
(72) Erfinder: Mann, Karl-Heinz, W-8120 Weilheim (DE); Geissler, Leonhard, W-8132 Tutzing (DE); Sigl, Andrea, W-8132 Tutzing (DE)
(74) Vertreter: Pfeifer, Hans-Peter, Dr., Dr. H.-P. Pfeifer Dr. P. Jany, Patentanwälte

(56) Entgegenhaltungen:
- WO-A-88/10412
- GB-A- 2 245 707
- US-A- 3 754 444
- US-A- 4 818 492
- US-A- 5 212 992
- SOVIET PATENTS ABSTRACTS Section EI, Week 9337, Derwent Publications Ltd., London, GB; Class S02, AN 93-294497 & SU-A-1 763 897 (THERMAL POWER INSTR PRODN RES INST) 23. September 1992
- RESEARCH DISCLOSURE, NO. 254, June 1985, pages 296-299, disclosure no. 25430, Emsworth, Hampshire, GB 'Niveau-Fühlanordnung für Pipettiervorrichtung'

## Beschreibung

Die Erfindung betrifft eine Flüssigkeitstransfereinrichtung für ein Analysegerät mit einer Flüssigkeitstransfernadel und einem kapazitiven Flüssigkeitshöhenstandsdetektor zur Detektion des Eintauchens der Flüssigkeitstransfernadel in eine in einem Gefäß befindliche Analyseflüssigkeit, wobei der Flüssigkeitshöhenstandsdetektor zwei Elektroden und eine Detektionsschaltung mit einer Wechselspannungsquelle zur Detektion einer Änderung der Kapazität zwischen den Elektroden aufweist.

In Analysegeräten, wie sie für die Analyse von Körperflüssigkeiten, insbesondere von Blut, erforderlich sind, werden Flüssigkeitstransfereinrichtungen benötigt, um Analyseflüssigkeiten, insbesondere flüssige Proben oder Reagenzien, zu transferieren. Gebräuchliche Flüssigkeitstransfereinrichtungen sind beispielsweise Pipettoren, die dazu verwendet werden, Proben oder Reagenzien aus einem ersten Gefäß anzusaugen und in ein zweites Gefäß auszustoßen, sowie Dispensoren, bei denen die Flüssigkeitstransfernadel über einen Schlauch an einen größeren Vorrat einer Flüssigkeit angeschlossen ist, welche mit Hilfe einer Pumpeinrichtung durch die Nadeln ausgestoßen werden kann. Dispensoren erfüllen meist zugleich auch die Pipettorfunktion. Allgemein ist als Flüssigkeitstransfereinrichtung im Sinne der vorliegenden Erfindung jede Vorrichtung anzusehen, die dazu dient, in einem Analysegerät in eine Analyseflüssigkeit einzutauchen, um irgendwelche Flüssigkeitstransferschritte (Ansaugen und/oder Ausstoßen von Flüssigkeit) mittels der Flüssigkeitstransfernadel zu ermöglichen. Die Flüssigkeitstransfernadel ist eine Hohlnadel, welche üblicherweise aus einem dünnen Rohr aus Metall oder Kunststoff besteht. Sie wird nachfolgend einfachheitshalber auch als "Nadel" bezeichnet.

Wenn die Nadel tief in die Analyseflüssigkeit eintaucht, bleibt ein relativ großer Flüssigkeitsüberschuß an ihrer Außenseite hängen. Hierdurch kann die Genauigkeit der Dosierung verschlechtert werden, vor allem aber kontaminiert der Flüssigkeitsüberschuß beim nächsten Eintauchen der Nadel die darin befindliche Flüssigkeit (sogenannte "Verschleppung"). Um die Eintauchtiefe besser zu kontrollieren, werden Flüssigkeitstransfereinrichtungen mit einer Sensoreinrichtung zur Detektion des Eintauchens der Nadel in die Analyseflüssigkeit versehen, die üblicherweise als Flüssigkeitshöhenstandsdetektor oder LLD (liquid level detector) bezeichnet wird. Der Flüssigkeitshöhenstandsdetektor ist mit dem Vertikalantrieb, durch den die Nadel in die Analyseflüssigkeit eingetaucht wird, verbunden, um die Eintauchbewegung zu stoppen, wenn die Spitze der Nadel um wenige Millimeter in die Analyseflüssigkeit eingetaucht ist. Die Vertikalposition der Nadel ist dabei zugleich ein Maß für den Höhenstand der Flüssigkeit in dem jeweiligen Gefäß. Infolgedessen ermöglicht der Flüssigkeitshöhenstandsdetektor zugleich die Kontrolle der in dem jeweiligen Gefäß vorhandenen Flüssigkeitsmenge, um beispielsweise ein Signal zu geben, wenn der Vorrat einer Reagenzflüssigkeit verbraucht ist und die Reagenzflasche deshalb ausgewechselt werden muß.

Ein gebräuchliches Konstruktionsprinzip für Flüssigkeitshöhenstandsdetektoren basiert darauf, den elektrischen Widerstand zwischen der Nadel und einer an der Spitze der Nadel angebrachten Elektrode zu messen. Nadel und Elektrode sind gegeneinander elektrisch isoliert, so daß der elektrische Widerstand zwischen ihnen im trockenen Zustand sehr hoch ist. Beim Eintauchen der Nadel und der Elektrode bildet die Probenflüssigkeit eine leitende Verbindung, so daß sich der elektrische Widerstand sprunghaft ändert. Dieses Signal läßt sich mit einfachen elektronischen Mitteln zuverlässig nachweisen. Ein wesentlicher Nachteil dieses Prinzips ist jedoch darin zu sehen, daß außer der Nadel eine Elektrode in die Flüssigkeit eintauchen muß, an der unvermeidlich ein Flüssigkeitsüberschuß hängen bleibt. Damit werden die zuvor erwähnten Probleme hinsichtlich Verschleppung und reduzierter Genauigkeit zusätzlich vergrößert. Eine solche Vorrichtung ist aus dem US-Patent 3,754,444 bakannt.

In dieser Beziehung überlegen sind kapazitive Flüssigkeitshöhenstandsdetektoren, bei denen als Signal zur Detektion des Eintauchens der Nadel in die Flüssigkeit die Änderung der elektrischen Kapazität zwischen zwei Sensorelektroden mittels einer elektronischen Detektionsschaltung, welche eine Wechselspannungsquelle einschließt, erfaßt wird. Die erste Elektrode ist dabei üblicherweise die Nadel selbst (welche aus Metall oder einem elektrisch leitenden (metallisierten) Kunststoff besteht) und mit der der heiße Pol der Wechselspannungsquelle verbunden ist (Signalelektrode). Die Gegenelektrode, welche üblicherweise auf Erdpotential liegt, ist bei den bekannten Vorrichtungen auf der Außenseite des Flüssigkeitsgefäßes (unter dessen Boden und teilweise um die Seitenwände des Gefäßes herum) angeordnet. Sie ist üblicherweise ein Bestandteil der Gefäßhalterung. Beim Eintauchen der Nadelspitze in die Flüssigkeit ändert sich die Kapazität zwischen der Signalelektrode und der Gegenelektrode aufgrund der elektrischen Leitfähigkeit und der dielektrischen Eigenschaften der Flüssigkeit.

Derartige Flüssigkeitshöhenstandsdetektoren sind in der EP-A-0 164 679, dem US-Patent 4 818 492 und der EP-A-0 355 791 beschrieben. Diese Druckschriften enthalten nähere Erläuterungen, auf welche hier Bezug genommen wird.

Ein grundsätzliches Problem kapazitiver Flüssigkeitshöhenstandsdetektoren besteht darin, daß die Kapazitätsänderung beim Eintauchen in die Flüssigkeit sehr klein ist im Vergleich zu den sonstigen zwangsläufig vorhandenen Kapazitäten ("Störkapazitäten", z.B. des Anschlußkabels und des Verstärkereingangs). Infolgedessen ist das Verhältnis zwischen Nutzsignal und Störsignalen sehr ungünstig. Besonders problematisch ist dabei, daß ein Teil der Störkapazitäten nicht konstant ist, sondern sich zeitlich verhältnismäßig schnell ändert. Dies gilt insbesondere für kapazitive Störungen, die durch die Bewegung von Objekten (Bestandteile des Analyseautomaten, Hände oder andere Körperteile des Bedienungspersonals) verursacht werden. Insbesondere auf einem vollautomatischen Analysegerät, welches zahlreiche bewegliche Teile hat, sind solche Störungen in der Praxis nicht zu vermeiden.

In der EP-A-0 355 791 wird ein spezielles derartiges Problem (Störungen durch eine das Gefäß verschließende Membran) dadurch behoben, daß ein Referenzsignal bei der Kontaktierung der Membran fixiert und bei der weiteren Abwärtsbewegung der Nadel die Differenz zu diesem fixierten Referenzsignal detektiert wird. Dieses Verfahren ist auf den speziellen Anwendungszweck ausgerichtet. Störkapazitäten, die sich zwischen der Fixierung des Referenzsignals und der Detektion der Flüssigkeitsoberfläche ändern, führen zu einer Fehldetektion.

Bei dem in dem US-Patent 4 818 492 beschriebenen Flüssigkeitshöhenstandsdetektor wird die Störkapazität der Zuleitungen passiv mit Hilfe einer Brückenschaltung kompensiert. Andere kapazitive Störungen werden hierdurch jedoch nicht eliminiert und können auch bei dieser Konstruktion Fehldetektionen verursachen. In der Literaturstelle Research Disclosure, no. 254, Juni 1985, Seite 296-299, disclosure no. 25430, Emsworth, Hampshire, G. B, "Niveau-Fühlanordnung für Pipettiervorrichtung" ist eine Pipettiervorrichtung mit Kapazitiver Niveaumessung beschrieben, die eine Spannungsfolgerschaltung zur Kompensation der Kabelkapazität aufweist.

Weiterhin ist die aktive Abschirmung einer Meßelektrode aus der Patentanmeldung GB-A-2245707 bekannt, wobei eine Abschirmelektrode die Meßelektrode fast über ihr gesamte Länge umschliebt, und die Abschirmelektrode sowie die Meßelektrode mit dem Eingang und dem Ausgang einer Spannungsfolgerschaltung derart verbunden sind, daß keine Spannungsdifferenz zwischen den beiden Elektroden auftritt.

Der Erfindung liegt die Aufgabe zugrunde, für Flüssigkeitstransfereinrichtungen von Analysegeräten einen Flüssigkeitshöhenstandsdetektor mit verbesserter Störungssicherheit zur Verfügung zu stellen, um eine zuverlässigere Funktion zu ermöglichen.

Die Aufgabe wird bei einer Flüssigkeitstransfereinrichtung der eingangs bezeichneten Art durch eine Vorrichtung mit den Merkmalen des Anspruchs 1 gelöst. Das Ausgangssignal der Spannungsfolgerschaltung entspricht dem Eingangssignal in Pegel und Phase. Infolgedessen tritt zwischen der Signalelektrode und den Kompensationselektrode keine Spannungsdifferenz auf.

Die mindestens eine Koaxialelektrode umgibt die Flüssigkeitstransfernadel vorzugsweise nahezu vollständig mit einer metallisch leitenden Fläche. In radialer Richtung wird die Nadel auf ihrem gesamten Umfang umschlossen. In axialer Richtung erstreckt sich die Koaxialelektrode über die gesamte Länge der Nadel mit Ausnahme der Nadelspitze, welche ein kurzes Stück aus der mindestens einen Koaxialelektrode hervorragt.

Als Spannungsfolgerschaltung ist für die Erfindung jede Schaltung geeignet, bei der das Ausgangssignal mit dem Eingangssignal in Phase und Pegel übereinstimmt, der ausgangsseitige Innenwiderstand aber wesentlich niedriger als der Eingangswiderstand ist.

Die Nadel besteht vorzugsweise insgesamt aus einem metallisch leitendem Material, unter Umständen kann jedoch auch ein Röhrchen aus Kunststoff verwendet werden, in das über seine gesamte Länge ein metallischer Leiter integriert ist.

Da bei der vorliegenden Erfindung zwischen der Signalelektrode und der Kompensationselektrode keine Spannungsdifferenz auftreten kann, ist die dort vorhandene Kapazität nicht wirksam, d.h. aktiv kompensiert. Außerdem ist die Gegenelektrode Teil der Koaxialelektrodenanordnung. Dadurch wird die Nutzkapazität weitgehend separiert von störenden Kapazitäten erfaßt. Es wird im wesentlichen nur die Kapazität im Bereich der Spitze der Nadel detektiert.

Die aktive Kompensation ermöglicht es darüber hinaus, gemäß einer besonders bevorzugten Ausführungsform ohne Beeinflussung des Nutzsignals eine zusätzliche Abschirmelektrode vorzusehen, die die Koaxialelektrodenanordnung als äußerste Elektrode umgibt und auf Konstantpotential, zweckmäßigerweise auf Erdpotential, liegt. Diese Abschirmelektrode bildet vorzugsweise zugleich die Gegenelektrode der Kapazitätsmeßanordnung. Eine unter dem Boden oder an der Seitenwand des Gefäßes befestigte Gegenelektrode ist dabei nicht notwendig. Beim Eintauchen der Nadel in die Flüssigkeit erfolgt eine Kapazitätsänderung durch Vergrößerung der wirksamen Kondensatorfläche in der unmittelbaren Umgebung der Nadel. Störeinflüsse durch die Umgebung, insbesondere bewegte Objekte sind dadurch weitgehend eliminiert. Außerdem ist die Abstrahlung des hochfrequenten Signals der Wechselspannungsquelle sehr gering. Obwohl bei dieser Ausführungsform die kapazitiv wirksame Fläche sehr klein und der absolute Wert der kapazitiven Änderung deswegen relativ gering ist, ergibt sich durch die im Rahmen der Erfindung erreichte Unterdrückung nahezu sämtlicher Störsignale ein überraschend gutes Signal-Rauschverhältnis.

Die elektrischen Leitungen, durch die die Elektroden mit der Detektionsschaltung verbunden sind, sind so geführt, daß störende Leitungskapazitäten vermieden und/oder kompensiert werden. Vorzugsweise werden abgeschirmte Koaxialleitungen verwendet, wobei die Leiter der Koaxialleitung mit der Nadel und den Koaxialelektroden entsprechend ihrer Anordnung innerhalb der Koaxialelektrodenanordnung verbunden sind.

Die Erfindung wird im folgenden anhand eines in den Figuren schematisch dargestellten Ausführungsbeispiels näher erläutert; es zeigen:
- Fig. 1: Eine Flüssigkeitstransfereinrichtung in perspektivischer Darstellung,
- Fig. 2: Eine stark schematisierte Schnittdarstellung einer Koaxialelektrodenanordnung in Verbindung mit einem Prinzipschaltbild der Detektionsschaltung,
- Fig. 3: eine teilweise aufgeschnittene perspektivische Darstellung einer Koaxialelektrodenanordnung,
- Fig. 4: eine schematische perspektivische Darstellung zur Erläuterung eines bevorzugten Herstellungsverfahrens für eine Koaxialelektrodenanordnung.
- Fig. 5: Ein Diagramm zum Vergleich des Signal-Rauschverhaltens bei der Erfindung und beim Stand der Technik.

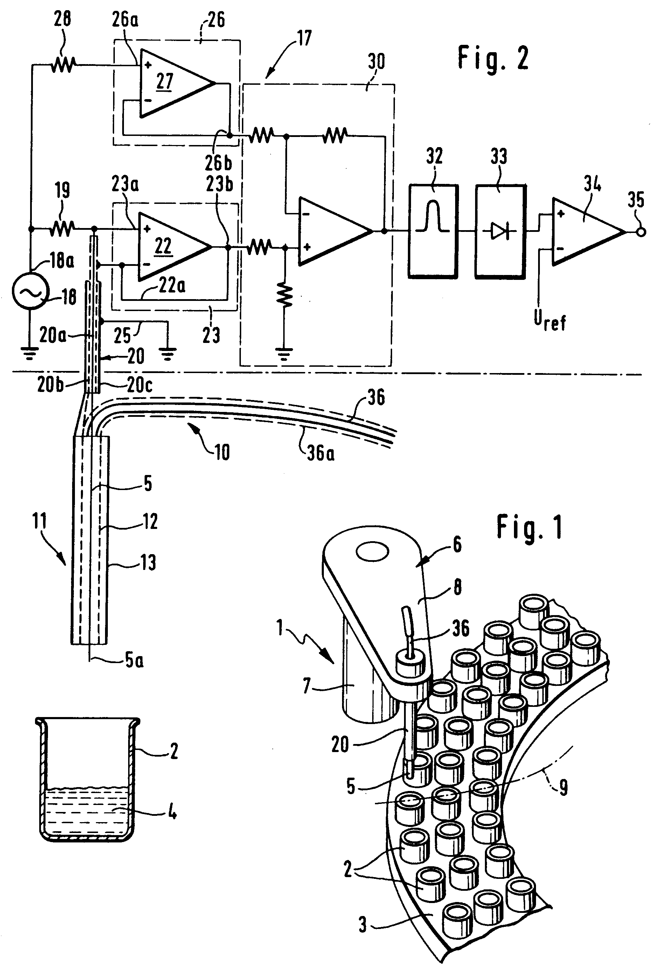

Die in Figur 1 dargestellte Flüssigkeitstransfereinrichtung 1 dient dazu, eine Analyseflüssigkeit aus einem der Gefäße 2 zu entnehmen und in ein anderes Gefäß zu transferieren. Die Gefäße 2 befinden sich auf einem Rotor 3 oder einer anderen beweglichen Gefäßhalterung. In der Praxis weisen automatische Analysegeräte im Regelfall mehrere Gefäßhalterungen auf.

Eine Flüssigkeitstransfernadel 5 ist an einer Nadelbewegungseinrichtung 6 befestigt, welche eine mittels eines nicht dargestellten Vertikalantriebs aufwärts und abwärts bewegbare Vertikalsäule 7 und einen Schwenkarm 8 aufweist. Dadurch kann die Nadel 5 auf dem Schwenkkreis 9 in verschiedene Positionen gebracht und in eines der Gefäße 2 abgesenkt werden. Derartige Flüssigkeitstransfereinrichtungen sind in verschiedenen Ausführungsformen bekannt. Im Hinblick auf einen geeigneten Antriebsmechanismus sei beispielsweise auf die EP-A-0 408 804 verwiesen.

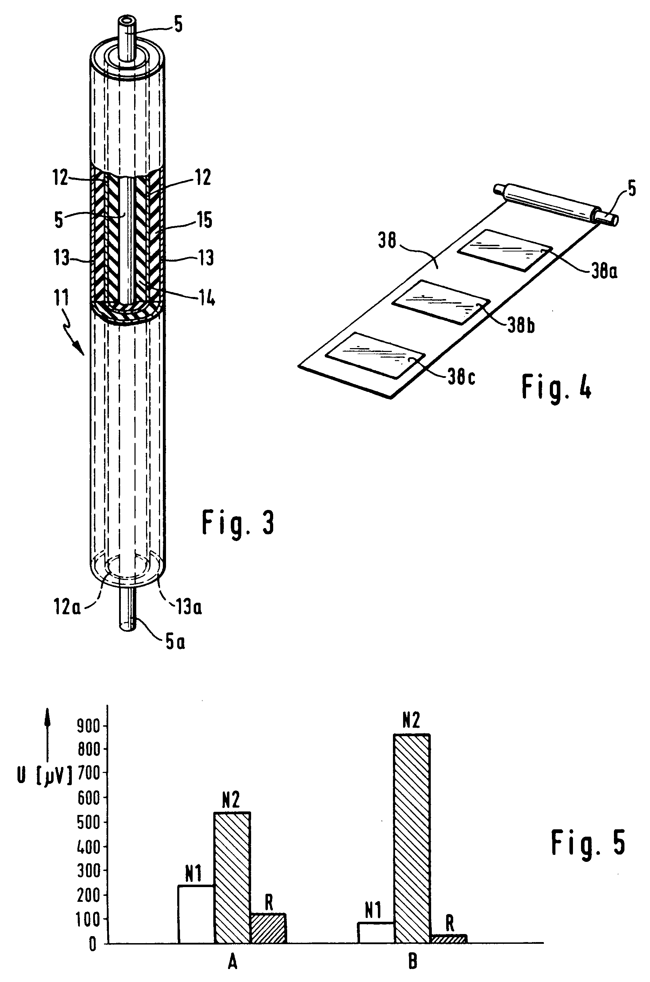

Die Flüssigkeitstransfernadel 5 ist Teil einer Koaxialelektrodenanordnung 11, die in Figur 2 in einer stark schematisierten Querschnittsdarstellung und in Figur 3 perspektivisch dargestellt ist.

Die Flüssigkeitstransfernadel 5 bildet die innerste Elektrode der Koaxialelektrodenanordnung 11 eines insgesamt mit 10 bezeichneten Flüssigkeitshöhenstandsdetektors. Sie ist von einer ersten Koaxialelektrode 12 und einer zweiten Koaxialelektrode 13 umgeben, die jeweils durch ein Dielektrikum 14 bzw. 15 von der Nadel und voneinander elektrisch isoliert sind. Die Koaxialelektroden 12,13 bestehen aus einem metallisch leitenden Material, beispielsweise einer dünnen Metallfolie und umgeben die Nadel 5 vollständig mit Ausnahme der Spitze 5a, welche ein kurzes Stück (im Regelfall weniger als 1 cm) in axialer Richtung herausragt.

Die in Figur 2 dargestellte Detektionsschaltung 17 des Flüssigkeitshöhenstandsdetektors 10 weist eine Wechselspannungsquelle 18 auf, deren heißer Pol 18a über einen Arbeitswiderstand 19 und den innersten Leiter 20a eines Koaxialkabels 20 mit der Nadel 5 verbunden ist. Die Nadel 5 ist außerdem mit dem nichtinvertierenden Eingang 23a eines Operationsverstärkers 22 verbunden, dessen Ausgang über die Leitung 22a mit seinem invertierenden Eingang verbunden ist. Dies ist eine übliche Ausführungsform einer Spannungsfolgerschaltung 23. Der Ausgang 23b der Spannungsfolgergschaltung 23 ist über einen ersten (inneren) Schirmleiter 20b des Koaxialkabels 20 mit der ersten Koaxialelektrode 12 verbunden.

Das Ausgangssignal der Spannungsfolgerschaltung 23 entspricht dem Eingangssignal in Pegel und Phase. Infolgedessen tritt zwischen der Nadel 5 und der Kompensationselektrode 12 keine Spannungsdifferenz auf. Durch diese aktive Kompensation ist die in dem Koaxialkabel 20 und in der Koaxialelektrodenanordnung 11 vorhandene Kapazität nicht wirksam.

Infolge dieser aktiven Kompensation wird die Kapazität der Koaxialelektrodenanordnung 11 einschließlich der Zuleitungen (Koaxialkabel 20) überwiegend von dem Streufeld zwischen der Spitze 5a der Nadel 5 und der Elektrode 13 bestimmt, welches die Nutzkapazität bildet. Diese Kapazität bildet einen Spannungsteiler mit dem Widerstand 19. Je größer die Kapazität wird, desto kleiner wird der kapazitive Widerstand der Nutzkapazität. Hieraus resultiert eine Spannungsänderung am Eingang 23a der Spannungsfolgerschaltung 23, die als Nutzsignal gemessen werden kann.

Die Frequenz der Wechselspannungsquelle 18 und der Widerstand des Arbeitswiderstands 19 werden zweckmäßigerweise so optimiert, daß bei gegebener Nutzkapazität eine möglichst große Spannungsdifferenz entsteht. Da der Wechselstromwiderstand einer Kapazität invers proportional zu der Frequenz ist, sollte die Wechselspannungsfrequenz relativ hoch liegen. Bewährt hat sich eine Frequenz von etwa 50 kHz. Eine höhere Frequenz würde zwar das Nutzsignal zusätzlich verbessern, jedoch andererseits Probleme mit störender Abstrahlung verursachen und relativ teure Bauteile erfordern.

Die Größe des Arbeitswiderstandes 19 liegt vorzugsweise in der Größenordnung des Wechselstromwiderstandes der Nutzkapazität bei der gewählten Frequenz.

Bei der dargestellten besonders bevorzugten Ausführungsform liegt die zweite, äußere Koaxialelektrode 13 auf einem Konstantpotential, wobei sie zweckmäßigerweise über die zweite, äußere Schirmleitung 20c des Koaxialkabels 20 an Erde (Leitung 25) liegt. Die äußere Koaxialelektrode 13 dient somit als Abschirmelektrode zur Abschirmung von Einstreuungen äußerer störender Felder und insbesondere zur Abschirmung von Störungen nach außen durch das an der Nadel 5 und der Kompensationselektrode 12 anstehenden Hochfrequenzsignal. Diese Abschirmung ist infolge der aktiven Kompensation zwischen den Elektroden 5, 12 ohne Störung des Nutzsignals möglich.

Von besonderem Vorteil ist, daß die Abschirmelektrode 13 bei der dargestellten bevorzugten Ausführungsform zugleich als Gegenelektrode der Nutzkapazität wirkt. Solange die Spitze 5a der Flüssigkeitstransfernadel 5 (wie in Fig. 2 dargestellt) nicht in die Analyseflüssigkeit 4 eintaucht, wirkt als effektive Nutzkapazität nur das streufeld im eng begrenzten Bereich der Spitze 5a zwischen dieser und dem unteren Teil der zweiten Koaxialelektrode 13. Wenn hingegen die Spitze 5a in die Flüssigkeit 4 eintaucht, führt die bei Analyseflüssigkeiten stets vorhandene elektrische Leitfähigkeit dazu, daß die Flüssigkeitsoberfläche als "zusätzliche Kondensatorplatte" wirkt, d.h. das Eintauchen führt zu einer effektiven Vergrößerung der Kondensatorfläche und damit zu einer Vergrößerung der Nutzkapazität. Dieser Kapazitätssprung ist zwar kleiner als bei den vorbekannten kapazitiven Flüssigkeitshöhenstandsdetektoren mit einem auf der Unterseite oder im Bereich der Wand des Gefäßes 2 angeordneten Gegenelektrode. Durch das im Rahmen der Erfindung wesentlich verbesserte Verhältnis zwischen Nutzsignal und Störsignal ist es jedoch möglich, diese kleine Änderung mit ausgezeichneter Zuverlässigkeit zu detektieren. Ein besonderer Vorteil ist darin zu sehen, daß Störeinflüsse durch die Umgebung, insbesondere bewegte Objekte weitgehend eliminiert werden.

Die Gegenelektrode des Flüssigkeitshöhenstandsdetektors ist Teil der Koaxialelektrodenanordnung. Sie ist also nicht wie bei auch mit einer Koaxialen Abschirmelektrode Kombiniert werden Könnten, außerhalb der Koaxialelektrodenanordnung 11, beispielsweise unter dem Boden des Gefäßes 2, angeordnet. Die Wirksamkeit der koaxialen Abschirmelektrode als Gegenelektrode im Vergleich zu einer zusätzlich vorhandenen speziellen Gegenelektrode (unter dem Gefäß 2) ist von der Entfernung zwischen dem aus der Kompensationselektrode 12 herausragenden Teil der Flüssigkeitstransfernadel 5 und dem unteren Ende 13a der zweiten Koaxialelektrode (Abschirmelektrode) 13 abhängig. Mit anderen Worten ist der Abstand zwischen dem unteren Ende 12a der ersten Koaxialelektrode (Kompensationselektrode) 12 und dem unteren Ende 13a der Abschirmelektrode 13 entscheidend für die Wirksamkeit der Abschirmelektrode 13 als Gegenelektrode des Flüssigkeitshöhenstandsdetektors 10. Bei der dargestellten bevorzugten Ausführungsform befinden sich die Enden 12a,13a auf gleicher Höhe, d.h. in dem geringstmöglichen Abstand zueinander. Dabei wird die Kapazität auch dann von dem Streufeld zwischen der Spitze 5a und der Abschirmelektrode 13 beherrscht (d.h. die Elektrode 13 wirkt als Gegenelektrode) wenn eine zusätzliche auf Konstantpotential liegende Elektrode (z.B. eine geerdete Halterung) in der Umgebung des Gefäßes 2 vorhanden ist. Dies ist auch dann noch der Fall, wenn das untere Ende 13a der Abschirmelektrode 13 geringfügig höher als das untere Ende 12a der Kompensationselektrode 12 liegt. Der Abstand zwischen beiden Enden in vertikaler Richtung sollte jedoch nicht mehr als 15 mm, bevorzugt nicht mehr als maximal 10 mm betragen.

Bei der in Figur 2 dargestellten bevorzugten Ausführungsform weist die Detektionsschaltung eine zweite identische Spannungsfolgerschaltung 26 auf, die mit Hilfe eines zweiten Operationsverstärkers 27 realisiert ist. Mit ihrem Eingang 26a ist das Signal der Wechselspannungsquelle 18 über einen Arbeitswiderstand 28 verbunden. Die Spannungsfolgerschaltungen 23 und 26 sollten möglichst identisch aufgebaut sein und sind vorzugsweise auf einem Chip monolytisch integriert. Auch der Arbeitswiderstand 28 der zweiten Spannungsfolgerschaltung sollte mit dem Arbeitswiderstand 19 übereinstimmen.

Die Ausgänge 23b, 26b der beiden Spannungsfolgerschaltungen 23, 26 liegen an einem in üblicher Weise aufgebauten Differenzverstärker 30 an. Das Ausgangssignal des Differenzverstärkers 30 ist folglich proportional zur Differenz der Ausgangssignale der Spannungsfolgerschaltungen 23, 26. Hierdurch wird eine passive Kompensation der Eingangskapazitäten der Operationsverstärker 22, 27 sowie eventuell in diesem Bereich einwirkender Streukapazitäten erreicht. Die Qualität dieser Kompensation ist davon abhängig, daß die Kapazitäten der beiden Signalverarbeitungszweige 19, 23 und 28, 26 gut übereinstimmen und möglichst klein sind. Dies ist bei den vorzugsweise verwendeten Dualoperationsverstärkern sehr gut gewährleistet, so daß das am Ausgang des Differenzverstärkers 30 anstehende Signal im wesentlichen nur von der Nutzkapazität im Bereich der Nadelspitze 5a abhängt.

Das Wechselspannungssignal am Ausgang des Differenzverstärkers 30 wird mit einem schmalbandigen Filter 32 gefiltert und durch einen Gleichrichter mit Integrator 33 in ein Gleichspannungssignal umgewandelt, welches ein unmittelbares Maß für die Nutzkapazität im Bereich der Nadelspitze 5a ist. Dieses Gleichspannungssignal wird mit Hilfe eines Komparators 34 mit einer Vergleichsspannung U_{ref} verglichen, welche auf einen mittleren Wert zwischen dem Signal im nicht eingetauchten Zustand und dem Signal im eingetauchten Zustand eingestellt ist. Am digitalen Ausgang 35 der Detektionsschaltung steht dann ein digitales Signal (logisch 1 oder logisch 0) an, welches in üblicher Weise zur Steuerung des Vertikalantriebs der Nadelbewegungseinrichtung 6 verwendet wird.

Im dargestellten Fall ist die Flüssigkeitstransfereinrichtung 1 als Dispensor ausgeführt, wobei ein Schlauch 36 vorgesehen ist, der die Nadel 5 mit einem Flüssigkeitsvorrat (beispielsweise einer Pufferflüssigkeit, die in größeren Mengen benötigt wird) verbunden ist. In diesem Fall sollte der Schlauch 36, wie in Figur 2 dargestellt, mit einer auf dem Kompensationspotential der Kompensationselektrode 12 liegenden Abschirmung 36a versehen sein. Gegebenenfalls ist es auch möglich, den Schlauch 36 in eine Koaxialleitung zu integrieren, die die hydraulische Funktion (Ansaugen und Ausstoßen von Flüssigkeit) und die elektrische Funktion (Anschluß der Koaxialelektrodenanordnung 11 an die Detektionsschaltung 17) erfüllt. In diesem Fall ist der Schlauch von mehreren zueinander koaxialen Schirmleitern umgeben, die mit den Koaxialelektroden in entsprechender Weise verbunden sind.

Bei der in Figur 2 dargestellten Ausführungsform ist die Nadel 5 mit dem heißen Pol 18a der Wechselspannungsquelle 18 verbunden, bildet also die Signalelektrode. Dies ist im Regelfall vorteilhaft. Es ist jedoch auch möglich, die Nadel 5 auf ein Konstantpotential zu legen, was insbesondere dann zweckmäßig sein kann, wenn die leitfähige Flüssigkeit 4 mit anderen Komponenten (z.B. Schläuchen oder Flaschen) in Verbindung steht, die ihrerseits auf einem Konstantpotential, insbesondere Erdpotential, liegen. In diesem Fall weist die Koaxialelektrodenanordnung zusätzlich zu der Nadel mindestens drei, vorzugsweise vier Koaxialelektroden auf, wobei die erste (innerste) und dritte Koaxialelektrode mit dem Ausgang der Spannungsfolgerschaltung verbunden sind, während die dazwischenliegende zweite Koaxialelektrode mit dem Eingang der Spannungsfolgerschaltung verbunden ist. Diese zweite Koaxialelektrode liegt am heißen Pol der Wechselspannungsquelle an und bildet die Signalelektrode. Die beidseitigen Kapazitäten werden durch die benachbarten Kompensationselektroden kompensiert. Auch in diesem Fall sind bevorzugt die Signalelektrode und die beiden Kompensationselektroden von einer zusätzlichen äußeren Koaxialelektrode als Abschirmelektrode umgeben, welche auf Konstantpotential liegt. Die Gegenelektrode für die Kapazitätsmessung wird in diesem Fall jedoch von der vorzugsweise auf dem gleichen Konstantpotential liegenden Nadel gebildet.

Figur 4 verdeutlicht eine bevorzugte Verfahrensweise zur Herstellung der Koaxialelektrodenanordnung. Dabei wird um die Nadel 5 eine Kunststoffolie 38 gewickelt, welche mehrere metallisierte Bereiche 38a bis 38c aufweist, die im aufgewickelten Zustand die Koaxialelektroden bilden. Die Dimensionen der metallisierten Bereiche und ihrer Abstände sind dabei selbstverständlich so bemessen, daß die durch die metallisierten Bereiche 38a bis 38c gebildeten Koaxialelektroden jeweils die Nadel 5 vollständig umgeben, andererseits im aufgewickelten Zustand voneinander durch die Kunststoffolie 38 isoliert sind. Diese Verfahrensweise ermöglicht es, auf einfache Weise eine Koaxialelektrodenanordnung mit guten mechanischen Eigenschaften für die Erfindung herzustellen.

Figur 5 zeigt die Relation zwischen dem Nutzsignal und dem Rauschen für einen gemäß der Stand der Technik aufgebauten kapazitiven Flüssigkeitshöhenstandsdetektor A im Vergleich zu einem erfindungsgemäßen Flüssigkeitshöhenstandsdetektor B. Dabei ist jeweils das Rauschsignal R, das Nutzsignal im nicht eingetauchten Zustand N1 und das Nutzsignal im eingetauchten Zustand N2 aufgetragen, wobei deren Werte am Ausgang des Differenzverstärkers 30 gemessen wurden. Man erkennt, daß bei der erfindungsgemäßen Konstruktion sowohl die Relation zwischen den Nutzsignalen N1, N2 und dem Rauschsignal R als auch die für die Zuverlässigkeit der Detektion entscheidende Differenz zwischen den Nutzsignalen N1 und N2 wesentlich besser ist.

## Patentansprüche

1. Flüssigkeitstransfereinrichtung für ein Analysegerät mit einer Flüssigkeitstransfernadel (5) und einem kapazitiven Flüssigkeitshöhenstandsdetektor (10) zur Detektion des Eintauchens der Flüssigkeitstransfernadel (5) in eine in einem Gefäß (2) befindliche Analyseflüssigkeit (4), wobei der Flüssigkeitshöhenstandsdetektor (10) zwei Elektroden und eine Detektionsschaltung (17) zur Detektion einer Änderung der Kapazität zwischen den Elektroden aufweist, die Detektionsschaltung (17) eine Wechselspannungsquelle (18) und eine Spannungsfolgerschaltung (23) umfaßt und eine der beiden Elektroden als Signalelektrode an die Wechselspannungsquelle (18) und an den Eingang (23a) der Spannungsfolgerschaltung (23) angeschlossen ist,
**dadurch gekennzeichnet,** daß
die Flüssigkeitstransfernadel (5) Teil einer Koaxialelektrodenanordnung (11) ist, die außer der Flüssigkeitstransfernadel (5) mindestens eine diese umgebende, von ihr isolierte und zu ihr räumlich fixierte Koaxialelektrode (12) aufweist, zwei Elektroden (5, 12) der Koaxialelektrodenanordnung (11) als Signalelektrode und Kompensationselektrode dienen, die Kompensationselektrode sich in axialer Richtung im wesentlichen über die gesamte Länge der Signalelektrode mit Ausnahme der Spitze der Nadel erstreckt, und der Ausgang (23b) der Spannungsfolgerschaltung (23) mit der zu der Signalelektrode benachbarten Kompensationselektrode verbunden ist, so daß zwischen der Signalelektrode und der Kompensationselektrode keine Spannungsdifferenz auftritt, und die Koaxialelektrodenanordnung (11) eine Gegenelektrode aufweist, die Teil der Koaxialelektrodenanordnung ist.

2. Flüssigkeitstransfereinrichtung nach Anspruch 1, **dadurch gekennzeichnet,** daß die Flüssigkeitstransfernadel (5) als Signalelektrode mit dem Eingang (23a) der Spannungsfolgerschaltung (23) und die benachbarte Koaxialelektrode (12) als Kompensationselektrode mit dem Ausgang (23b) der Spannungsfolgerschaltung (23) verbunden ist.

3. Flüssigkeitstransfereinrichtung nach Anspruch 1 oder 2, **dadurch gekennzeichnet,** daß die Koaxialelektrodenanordnung (11) eine Abschirmelektrode (13) aufweist, die die Signalelektrode und die Kompensationselektrode umgibt, auf Konstantpotential liegt und als Gegenelektrode wirkt.

4. Vorrichtung nach einem der vorhergehenden Ansprüche, **dadurch gekennzeichnet,** daß die Signalelektrode über einen hochohmigen Arbeitswiderstand (19) an die Wechselspannungsquelle (18) angeschlossen ist.

5. Vorrichtung nach einem der vorhergehenden Ansprüche, **dadurch gekennzeichnet,** daß die Detektionsschaltung (17) eine zweite identische Spannungsfolgerschaltung (26) aufweist, die in gleicher Weise wie die erste Spannungsfolgerschaltung (23) mit der Wechselspannungsquelle (18), nicht jedoch mit der Signalelektrode verbunden ist und die Ausgänge (23b,26b) beider Spannungsfolgerschaltungen (23,26) mit einem Differenzverstärker (30) verbunden sind.

6. Vorrichtung nach Anspruch 5, **dadurch gekennzeichnet,** daß die beiden Spannungsfolgerschaltungen (23,26) monolytisch integriert sind.

7. Vorrichtung nach einem der vorhergehenden Ansprüche, **dadurch gekennzeichnet,** daß die elektrischen Leitungen, über die die Flüssigkeitstransfernadel (5) und die Koaxialelektroden (12,15) an die Detektionsschaltung (17) angeschlossen sind, als abgeschirmte Koaxialleitung (20) ausgebildet sind.

8. Vorrichtung nach Anspruch 7, bei der die Flüssigkeitstransfernadel an einen Schlauch (36) zum Zuführen oder Absaugen eines fluiden Mediums angeschlossen ist, **dadurch gekennzeichnet,** daß der Schlauch (36) eine Abschirmung (36a) aufweist.

## Claims

1. Liquid transfer device for an analysis unit with a liquid transfer needle (5) and a capacitive liquid level detector (10) for detecting the dipping of the liquid transfer needle (5) into an analysis liquid (4) contained in a vessel (2), the liquid level detector (10) comprising two electrodes and a detection circuit (17) for detecting a change in capacitance between the electrodes, the detection circuit (17) comprising an a.c. voltage source (18) and an isolation amplifier circuit (23) and one of the two electrodes being connected as a signal electrode to the a.c. voltage source (18) and to the input (23a) of the isolation amplifier circuit,
characterized in that
the liquid transfer needle (5) is part of a coaxial electrode arrangement (11) which comprises in addition to the liquid transfer needle (5) at least one coaxial electrode (12) surrounding the latter, which coaxial electrode is insulated from the liquid transfer needle and placed in a fixed spatial relationship to the liquid transfer needle, in that two electrodes (5,12) of the coaxial electrode arrangement (11) serve as signal electrode and compensating electrode, the compensating electrode extending in axial direction essentially over the entire length of the signal electrode with the exception of the needle tip, in that the output (23b) of the isolation amplifier circuit (23) is connected to the compensating electrode adjacent to the signal electrode, so that no voltage difference occurs between the signal electrode and the compensating electrode, and in that the coaxial electrode arrangement (11) comprises a counter electrode which is part of the coaxial electrode arrangement (11).

2. Liquid transfer device according to claim 1, characterized in that the liquid transfer needle (5) is connected as signal electrode to the input (23a) of the isolation amplifier circuit (23) and the adjacent coaxial electrode (12) is connected as compensating electrode to the output (23b) of the isolation amplifier circuit (23).

3. Liquid transfer device according to claim 1 or 2, characterized in that the coaxial electrode arrangement (11) comprises a screening electrode (13) which surrounds the signal electrode and the compensating electrode, lies at constant potential and acts as counter electrode.

4. Device according to any one of the preceding claims, characterized in that the signal electrode is connected via a high-value load resistor (19) to the a.c. voltage source (18).

5. Device according to any one of the preceding claims, characterized in that the detection circuit (17) comprises a second identical isolation amplifier circuit (26) which is connected in the same way as the first isolation amplifier circuit (23) to the a.c. voltage source (18), but not to the signal electrode, and in that the outputs (23b,26b) of the two isolation amplifier circuits (23,26) are connected to a differential amplifier (30).

6. Device according to claim 5, characterized in that the two isolation amplifier circuits (23,26) are integrated monolithically.

7. Device according to any one of the preceding claims, characterized in that the electrical lines by means of which the liquid transfer needle (5) and the coaxial electrodes (12,15) are connected to the detection circuit (17) are screened coaxial lines (20).

8. Device according to claim 7, in which the liquid transfer needle is connected to a hose (36) for the feeding or drawing off of a liquid medium, characterized in that the hose (36) comprises a screening (36a).

## Revendications

1. Dispositif de transfert de liquide pour un appareil d'analyse, comprenant une aiguille (5) de transfert de liquide et un détecteur de niveau de liquide capacitif (10) servant à détecter l'immersion de l'aiguille (5) de transfert de liquide dans un liquide d'analyse (4) se trouvant dans un récipient (2), le détecteur (10) de niveau de liquide comprenant deux électrodes et un circuit de détection (17) servant à détecter un changement de la capacité entre les électrodes, le circuit de détection (17) comprenant une source de tension alternative (18) et un circuit suiveur de tension (23), et une des deux électrodes étant reliée, en tant qu'électrode de signal, à la source de tension alternative (18) et à l'entrée (23a) du circuit suiveur de tension (23),
caractérisé en ce que
l'aiguille (5) de transfert de liquide fait partie d'un dispositif d'électrodes coaxiales (11) qui comprend, en dehors de l'aiguille (5) de transfert de liquide, au moins une électrode coaxiale (12) qui entoure l'aiguille, est isolée d'elle et est fixe dans l'espace par rapport à elle, deux électrodes (5, 12) du dispositif d'électrodes coaxiales (11) servent d'électrode de signal et d'électrode de compensation, l'électrode de compensation s'étend essentiellement sur toute la longueur de l'électrode de signal, dans le sens axial, à l'exception de la pointe de l'aiguille, et la sortie (23b) du circuit suiveur de tension (23) est reliée à l'électrode de compensation contiguë à l'électrode de signal, de manière à ce qu'aucune différence de potentiel n'apparaisse entre l'électrode de signal et l'électrode de compensation, et le dispositif d'électrodes coaxiales (11) comprend une contre-électrode qui fait partie du dispositif d'électrodes coaxiales.

2. Dispositif de transfert de liquide selon la revendication 1, caractérisé en ce que l'aiguille (5) de transfert de liquide est reliée, en tant qu'électrode de signal, à l'entrée (23a) du circuit suiveur de tension (23) et l'électrode coaxiale (12) contiguë est reliée, en tant qu'électrode de compensation, à la sortie (23b) du circuit suiveur de tension (23).

3. Dispositif de transfert de liquide selon l'une des revendications 1 ou 2, caractérisé en ce que le dispositif d'électrodes coaxiales (11) comprend une grille de protection (13) qui entoure l'électrode de signal et l'électrode de compensation, se trouve à un potentiel constant et agit en tant que contre-électrode.

4. Dispositif selon l'une des revendications précédentes, caractérisé en ce que l'électrode de signal est reliée à la source de tension alternative (18) par le biais d'une résistance de charge (19) de valeur ohmique élevée.

5. Dispositif selon l'une des revendications précédentes, caractérisé en ce que le circuit de détection (17) comprend un second circuit suiveur de tension (26) identique qui est relié, de la même manière que le premier circuit suiveur de tension (23), à la source de tension alternative (18), mais n'est pas relié à l'électrode de signal, et les sorties (23b, 26b) des deux circuits suiveurs de tension (23, 26) sont reliées à un amplificateur différentiel (30).

6. Dispositif selon la revendication 5, caractérisé en ce que les deux circuits suiveurs de tension (23, 26) sont intégrés de manière monolithique.

7. Dispositif selon l'une des revendications précédentes, caractérisé en ce que les lignes électriques par l'intermédiaire desquelles l'aiguille (5) de transfert de liquide et les électrodes coaxiales (12, 15) sont connectées au circuit de détection (17) sont exécutées en tant que ligne coaxiale blindée (20).

8. Dispositif selon la revendication 7, dans lequel l'aiguille de transfert de liquide est reliée à un tuyau (36) servant à amener ou expulser un milieu fluide, caractérisé en ce que le tuyau (36) est pourvu d'un blindage (36a).
